# EUROPEAN PATENT SPECIFICATION

(11) **EP 1 598 634 B1**
(45) Date of publication and mention of the grant of the patent: **11.07.2007**
(21) Application number: 05010878.6
(22) Date of filing: 19.05.2005
(51) Int. Cl.: G01B 7/30, G01D 5/16, G01D 11/24

(54) **Position sensor**
Positionssensor
Capteur de position

(30) Priority: 20.05.2004 JP 2004150569
(43) Date of publication of application: 23.11.2005
(73) Proprietor: ALPS ELECTRIC CO., LTD., Tokyo 145-8501 (JP)
(72) Inventor: Terui, Kyuichiro Alps Electric Co., Ltd., Tokyo 145-8501 (JP); Suzuki, Kazuhiko Alps Electric Co., Ltd., Tokyo 145-8501 (JP)
(74) Representative: Klunker . Schmitt-Nilson . Hirsch

(56) References cited:
- EP-A- 1 367 359
- US-A- 4 920 784
- US-A- 5 375 333
- US-A- 5 609 184
- US-B1- 6 198 185

## Description

### BACKGROUND OF THE INVENTION

### 1. Field of the Invention

The present invention relates to a position sensor, and more particularly, to a position sensor in which a main section of a rotating mechanism is suitably assembled and fixed.

### 2. Description of the Related Art

In general, position sensors of a magnetic detection type are used, for example, to detect the rotation angle of an accelerator, a brake, or a steering wheel in an automobile.

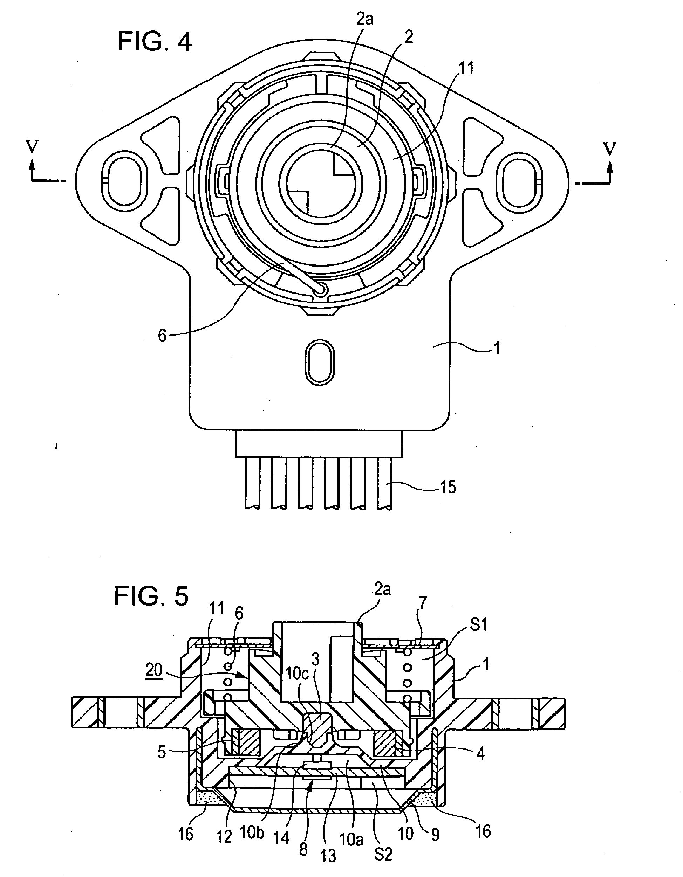

A known position sensor of this type is configured, as disclosed in, for example, Japanese Unexamined Patent Application Publication No. 2003-269992. The configuration thereof will be briefly described with reference to FIGS. 4 and 5. A rotating mechanism 20 is housed in one storage space S1 inside a cylindrical case 1 having a partition 10, and is hermetically sealed by a first lid 7 while a shaft 2a protrudes outside. An electrical circuit 8 is housed in the other storage space S2 of the case 1, and is hermetically sealed by a second lid 9. An annular magnet 4 mounted on a rotary member 2, which defines a main section of the rotating mechanism 20, rotates with the rotation given from a subject to be detected, such as an external pedal, to the rotary member 2, and changes its magnetic field. A giant magnetoresistive element 14 serving as a magnetoelectric transducer detects the change of the magnetic field, and measures the position of the rotary member 2. An electric signal in accordance with the rotation angle of the rotary member 2 is output from the giant magnetoresistive element 14. Different poles of the annular magnet 4 oppose each other across the rotation axis of the rotary member 2, and a back yoke 5 (herein after referred to as a holding member 5) that also functions as a holding member for protecting the magnet 4 is fitted on the magnet 4. Descriptions of other structures are omitted.

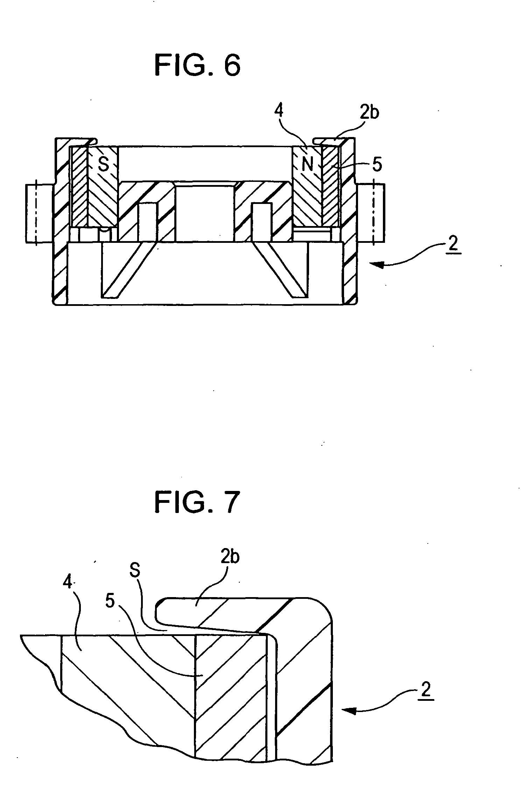

A modification of the rotary member 2 will be described with reference to FIG. 6. Conventionally, since the magnet 4 and the holding member 5 fitted thereon need to be concentrically arranged, they are placed on the bottom of the rotary member 2, and are fixed by caulking a plurality of planar projections 2b, which are provided at an axial end of the rotary member 2, onto axial ends of the magnet 4 and the holding member 5 while drawing the planar projections 2b out by heat.

However, since the material of the rotary member 2 is resin, the following problem occurs in the process of drawing the planar projections 2b out by hot caulking, as shown in FIG. 7. That is, it is technically difficult to deform the planar projections 2b made of resin by applying heat thereto. A gap S is formed between the planar projections 2b, and the magnet 4 and the holding member 5, and it is difficult to ensure firm fixing of the rotary member 2 to the magnet 4 and the holding member 5.

Moreover, since the magnet 4 is made of a brittle material that is easily cracked and broken, it is reduced in performance and is damaged by heat and force applied thereto during hot caulking in order to remove the gap S.

In addition, the hot caulking process takes much time because of the above-described technical difficulty, compared with the entire operation process. This bears heavily on the production cost.

### SUMMARY OF THE INVENTION

The present invention has been made in view of these problems, and an object of the invention is to provide a position sensor having a rotary member, which ensures a reliable fixing state of a magnet and a holding member to the rotary member, and eliminates the necessity of an assembly process that requires a complicated technique and much time.

In order to achieve the above object, according to an aspect, the present invention provides a position sensor including a rotary member having a main portion and a claw, an annular magnet mounted in the rotary member, and a holding member mounted in the rotary member outside the magnet, wherein the magnet and the holding member are concentrically arranged, and are fixedly clamped by the main portion and the claw.

In this case, assembly is performed by a so-called snap-fitting method in which the magnet and the holding member are inserted while elastically deforming the claw, and are clamped between the main portion and the claw of the rotary member. Since the conventional hot caulking process for fixing the rotary member to the magnet and the holding member is unnecessary, reliable fixing can be performed in a short time, and the magnet can be prevented from brittle fracture.

Preferably, the magnet has an outward protruding portion disposed at an end adjacent to the main portion of the rotary member to clamp the holding member in cooperation with the claw. The outward protruding portion may be formed of a flange provided on the entirety of the periphery of the magnet, or may be provided only on a part of the periphery.

In this case, the holding member can be fixedly clamped in the direction of its center axis by the outward protruding portion of the magnet and the claw of the rotary member. Therefore, the radial length of the claw for clamping and fixing the magnet and the holding member to the main portion of the rotary member can be reduced to a length such as to fix only the outer holding member. This makes it possible to reduce the pressure given to elastically deform the claw of the rotary member outward when fitting the magnet and the holding member. Moreover, since the pressure applied to the magnet can be reduced, the magnet can be prevented from breakage.

The holding member may be made of a ferromagnetic material.

When the holding member is made of a ferromagnetic material, the magnet is protected and can form an efficient closed magnetic circuit with little flux leakage, and a high flux density is obtained even by an inexpensive and weak magnet.

The position sensor of the present invention ensures a reliable fixing state of the magnet and the holding member to the rotary member, and eliminates the necessity of an assembly process which requires a complicated technique and much time.

### BRIEF DESCRIPTION OF THE DRAWINGS

FIG. 1 is an exploded perspective view of a rotary member of a position sensor according to an embodiment of the present invention;
FIG. 2 is an exploded sectional view of the rotary member shown in FIG. 1;
FIG. 3 is a cross-sectional view showing an assembled state of the rotary member shown in FIG. 1;
FIG. 4 is a plan view of a known position sensor;
FIG. 5 is a cross-sectional view taken along line V-V in FIG. 4;
FIG. 6 is a cross-sectional view showing an assembled state of a rotary member in the known position sensor; and
FIG. 7 is a cross-sectional view showing a state in which a planar projection provided at an edge of the rotary member in the known position sensor is caulked.

### DESCRIPTION OF THE PREFERRED EMBODIMENTS

A position sensor according to an embodiment of the present invention will be described below with reference to the attached drawings.

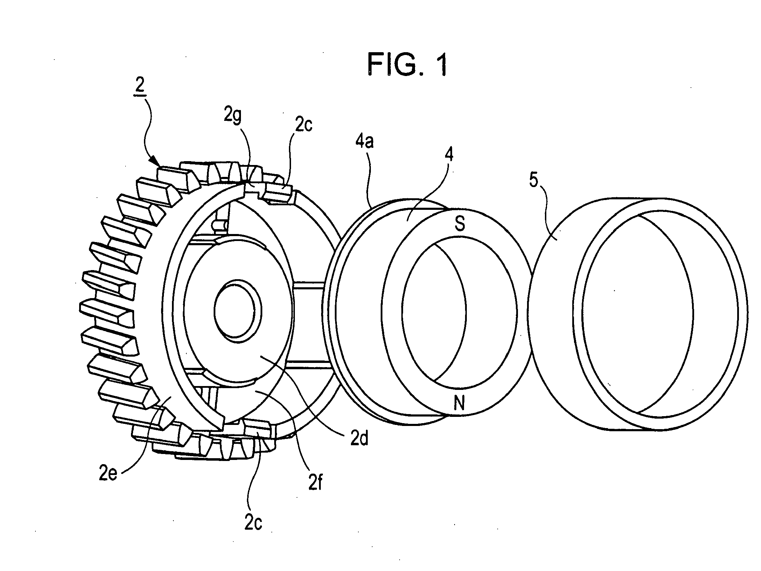

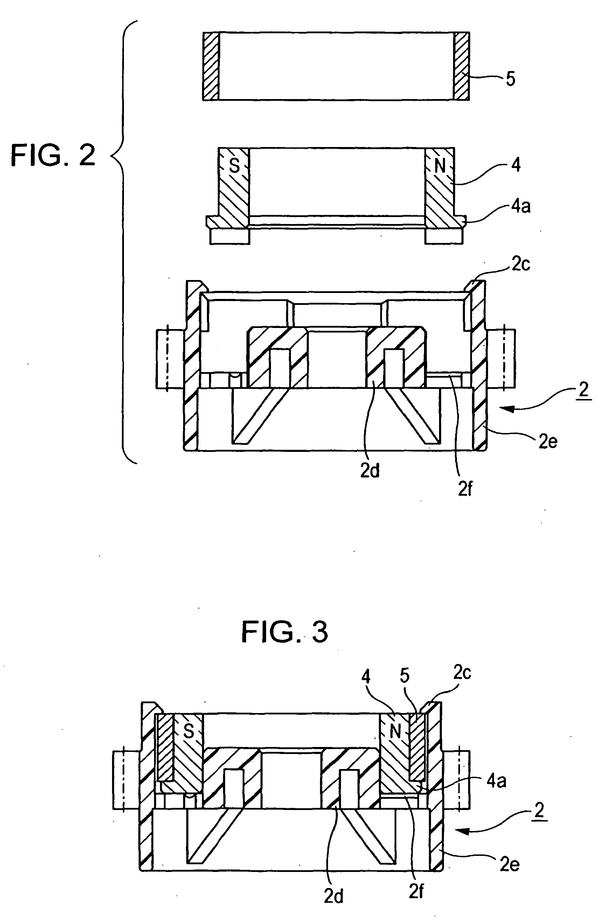

FIG. 1 is an exploded perspective view of a rotary member in a position sensor according to an embodiment of the present invention, FIG. 2 is an exploded sectional view of the rotary member, and FIG. 3 is a cross-sectional view of the rotary member in an assembled state. Since components of the position sensor of the present invention, except the rotary member, are almost the same as those of the known position sensor, for convenience, the overall configuration of the present invention will be described in conjunction with that of the known position sensor shown in FIGS. 4 and 5.

As shown in FIGS. 4 and 5, the position sensor of this embodiment includes a resin case 1 having a cylindrical center portion, a resin rotary member 2 housed in a storage space S1 between one open end 11 of the case 1 and a partition 10, a metal support projection 3 press-fitted in a rotation center of the bottom of the rotary member 2, an annular magnet 4 fixed to the outer periphery of the bottom of the rotary member 2 and disposed near the partition 10, a holding member 5 fixed to the rotary member 2 around the magnet 3 to prevent flux leakage from the magnet 4, a return spring 6 fixed to the case 1 at one end and fixed to the rotary member 2 at the other end, a first lid 7 made of a metal plate to close the open end 11 in a state in which a shaft 2a of the rotary member 2 protrudes out of the case 1, an electrical circuit 8 housed in a storage space S2 between the other open end 12 of the case 1 and the partition 10, and a second lid 9 made of a metal plate to close the open end 12 in order to seal the electrical circuit 8 in the storage space S2.

The rotary member 2, the support projection 3, the magnet 4, and the holding member 5 are combined, and constitute a rotating mechanism 20 rotatably provided inside the storage space S1 of the case 1. For example, an accelerator pedal, a brake pedal, or a steering wheel of an automobile serving as an unshown subject to be detected is connected to the shaft 2a of the rotary member 2 via a wire or a steering shaft.

As shown in FIGS. 1, 2, and 3, outer and inner concentric cylindrical portions 2d and 2e are connected by a main portion 2f in the rotary member 2, and the magnet 4 and the holding member 5 are placed on the main portion 2f. Claws 2c for clamping and fixing the magnet 4 and the holding member 5 are provided at a part of an end of the outer cylindrical portion 2e of the rotary member 2 opposing the main portion 2f (at two points opposing in the radial direction in this embodiment). The claws 2c have cutouts 2g on both peripheral sides thereof for easy elastic deformation. A flange 4a is provided over the entire peripheral edge of the magnet 4 close to the main portion 2f of the rotary member 2, and functions as an outward protruding member that clamps the holding member 5 in cooperation with the claws 2c. The outward protruding member may be provided only at a part of the peripheral edge.

In order to assemble the rotary member 2, the magnet 4, and the holding member 5, the magnet 4 and the holding member 5 fitted on the magnet 4 are inserted between the outer and inner cylindrical portions 2d and 2e of the rotary member 2, and are further inserted while elastically deforming the claws 2c outward in the radial direction. Then, as shown in FIG. 3, one end face of the magnet 4 contacts the main portion 2f of the rotary member 2, and simultaneously, the claws 2c elastically return inward in the radial direction because of their elasticity to engage with an end face of the holding member 5. Consequently, the magnet 4 and the holding member 5 are fixedly held while being clamped between the main portion 2f and the claws 2c of the rotary member 2. In this embodiment, the magnet 4 and the holding member 5 can thus be simply and easily mounted in the rotary member 2 by adopting a so-called snap-fitting method utilizing elastic deformation of the claws 2c. Unlike the related art, the magnet 4 is fixed in the direction of its center axis by pressing the holding member 5 with the claws 2c. Therefore, the magnet 4 is reliably fixed, and will not suffer performance degradation and breakage due to hot caulking that occur in the related art.

The flange 4a serving as the outward protruding member for clamping the holding member 5 in cooperation with the claws 2c is provided at the end of the magnet 4 close to the main portion 2f of the rotary member 2. Therefore, the holding member 5 can be fixedly clamped in the direction of its center axis by the flange 4a of the magnet 4 and the claws 2c. Accordingly, the radial length of the claws 2c for clamping and fixing the magnet 4 and the holding member 5 to the main portion 2f of the rotary member 2 can be reduced to a length such as to fix only the outer holding member 5. This makes it possible to reduce the pressure given to elastically deform the claws 2c of the rotary member 2 outward when fitting the magnet 4 and the holding member 5 into the rotary member 2, and to make the assembly operation easier.

While the material of the rotary member 2 in this embodiment is resin because of cost advantage and easy formation, it may be a special resin material or a material other than resin.

According to the use condition, a magnet may be selected as the magnet 4 from generally available magnets, for example, a ferrite magnet, an Al-Ni-Co-Fe-based magnet, a rare earth-cobalt magnet, a rare earth-iron magnet, and carbon steel.

By selecting a ferromagnetic material, such as soft iron, pure iron, or a yoke, as the material of the holding member 5, it is possible to produce an efficient magnetic detection position sensor that reduces flux leakage. Since the flux leakage is further reduced by shaping the holding member 5 shown in FIGS. 1, 2, and 3 to also cover the outer peripheral portion of the flange 4a of the magnet 4, it is preferable to determine the shape of the holding member 5 according to the use condition.

In the position sensor having the configuration shown in FIGS. 4 and 5, when the rotary member 2 is rotated by a predetermined amount by a subject to be detected, the magnetic field of the magnet with respect to a giant magnetoresistive element 14 changes with the rotation of the rotary member 2. Therefore, an output signal from the electrical circuit 8 changes, and, for example, the rotation amount of the subject can be detected based on the change of the output. When the rotating force of the subject for the rotary member 2 is removed, the rotary member 2 is rotated in reverse to its initial position by the elastic recovery force of the return spring 6.

The position sensor of the present invention is not limited to the above-described embodiment, and various modifications are possible as required.

## Claims

1. A position sensor comprising:
a rotary member (2) having a main portion (2f) and a claw (2c);
an annular magnet (4) mounted in the rotary member (2); and
a holding member (5) mounted in the rotary member (2) outside the magnet (4),
wherein the magnet (4) and the holding member (5) are concentrically arranged, and are fixedly clamped by the main portion (2f) and the claw (2c).

2. The position sensor according to claim 1, wherein the magnet has an outward protruding portion (4a) disposed at an end adjacent to the main portion (2f) of the rotary member (2) to clamp the holding member in cooperation with the claw (2c).

3. The position sensor according to claim 1 or 2, wherein the holding member (5) is made of a ferromagnetic material.

## Patentansprüche

1. Positionssensor, aufweisend:
ein Drehelement (2), das einen Hauptbereich (2f) und eine Klaue (2c) aufweist;
einen Ringmagneten (4), der in dem Drehelement (2) angebracht ist; und
ein Halteelement (5), das in dem Drehelement (2) außenseitig von dem Magneten (4) angebracht ist,
wobei der Magnet (4) und das Halteelement (5) konzentrisch angeordnet sind und durch den Hauptbereich (2f) und die Klaue (2c) fest eingeklemmt sind.

2. Positionssensor nach Anspruch 1,
wobei der Magnet einen nach außen ragenden Bereich (4a) aufweist, der an einem Ende nahe dem Hauptbereich (2f) des Drehelements (2) angeordnet ist, um das Halteelement in Zusammenwirkung mit der Klaue (2c) einzuklemmen.

3. Positionssensor nach Anspruch 1 oder 2,
wobei das Halteelement (5) aus einem ferromagnetischen Material gebildet ist.

## Revendications

1. Capteur de position comprenant :
un élément rotatif (2) ayant une partie principale (2f) et une griffe (2c) ;
un aimant annulaire (4) monté dans l'élément rotatif (2) ; et
un élément de support (5) monté dans l'élément rotatif (2) à l'extérieur de l'aimant (4),
dans lequel l'aimant (4) et l'élément de support (5) sont disposés de façon concentrique, et sont serrés de manière fixe par la partie principale (2f) et la griffe (2c).

2. Capteur de position selon la revendication 1, dans lequel l'aimant a une partie faisant saillie vers l'extérieur (4a) disposée à une extrémité voisine de la partie principale (2f) de l'élément rotatif (2) pour serrer l'élément de support en coopération avec la griffe (2c).

3. Capteur de position selon la revendication 1 ou 2, dans lequel l'élément de support (5) est fait d'un matériau ferromagnétique.
